(19) Europäisches Patentamt / European Patent Office / Office européen des brevets

(11) **EP 3 845 930 B1**

(12) **EUROPEAN PATENT SPECIFICATION**

(45) Date of publication and mention
of the grant of the patent:
**31.07.2024 Bulletin 2024/31**

(21) Application number: **20216169.1**

(22) Date of filing: **21.12.2020**

(51) International Patent Classification (IPC):
*G01V 8/00* $^{(2006.01)}$   *H01Q 13/02* $^{(2006.01)}$
*H01Q 19/06* $^{(2006.01)}$   *H01Q 19/10* $^{(2006.01)}$
*H01Q 19/195* $^{(2006.01)}$   *H01Q 21/00* $^{(2006.01)}$
*H01Q 21/08* $^{(2006.01)}$

(52) Cooperative Patent Classification (CPC):
**H01Q 21/0012; G01V 8/005; H01Q 13/02;
H01Q 13/0225; H01Q 19/062; H01Q 19/104;
H01Q 19/195; H01Q 21/08**

(54) **PASSIVE SECURITY CHECKING DEVICE AND RECEIVING ANTENNA UNIT THEREOF**

PASSIVE SICHERHEITSÜBERPRÜFUNGSVORRICHTUNG UND EMPFANGSANTENNENEINHEIT DAVON

DISPOSITIF DE VÉRIFICATION DE SÉCURITÉ PASSIVE ET SON UNITÉ D'ANTENNE DE RÉCEPTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2019 CN 201911402451**

(43) Date of publication of application:
**07.07.2021 Bulletin 2021/27**

(73) Proprietors:
• **Tsinghua University**
**Haidian District,
Beijing 100084 (CN)**
• **Nuctech Company Limited
TongFang Building
Shuangqinglu Road
Haidian District
Beijing 100084 (CN)**

(72) Inventors:
• **ZHAO, Ziran
BEIJING, 100084 (CN)**
• **CHEN, Zhiqiang
BEIJING, 100084 (CN)**
• **LI, Yuanjing
BEIJING, 100084 (CN)**
• **YOU, Yan
BEIJING, 100084 (CN)**
• **LIU, Wenguo
BEIJING, 100084 (CN)**
• **MA, Xuming
BEIJING, 100084 (CN)**
• **XIE, Huan
BEIJING, 100084 (CN)**

(74) Representative: **Cabinet Beau de Loménie
158, rue de l'Université
75340 Paris Cedex 07 (FR)**

(56) References cited:
**CN-A- 106 918 843   CN-A- 109 361 074
CN-A- 109 471 194   US-A1- 2019 115 666
US-B1- 7 583 074**

# EP 3 845 930 B1

**Description**

## TECHNICAL FIELD

The present disclosure relates to a passive security checking device, in particular, a receiving antenna unit for a passive security checking device, and a passive security checking device including the receiving antenna unit.

## BACKGROUND

Human security checking technology based on passive millimeter wave or terahertz wave has unique advantages: it achieves imaging by detecting the millimeter wave or terahertz wave of objects themselves due to good penetrability of millimeter wave or terahertz wave, thereby judging suspicious objects without active radiation, which is absolutely safe to human body.

At present, the passive security checking device generally uses a direct detector based on normal temperature. An antenna at the front end of the detector uses a conventional horn antenna. The horn antenna is characterized in that it can obtain symmetrical wave beams, that is, primary wave beams in planes E and H have angles which are substantially equal to each other in the directional diagram. Since 3dB wave beam angle of the horn antenna is inversely proportional to the antenna aperture thereof. As the coupling efficiency becomes higher, the antenna aperture becomes larger. In such a case, fewer horn antennae can be arranged per focal spot as the antenna aperture becomes larger, thereby forming a contradiction between the coupling efficiency and sampling interval in a quasi-optical system. In addition, the conventional horn antenna is used as a feed source of a radiometer with the following feature: the coupling efficiency of the antenna with the lens is low, usually less than 50%.

The following documents disclose related art of the present invention.

The Chinese patent application CN 109 361 074 A discloses a pyramidal horn unit antenna with a function of suppressing array grating lobe.

The Chinese patent application CN 109 471 194 A discloses a millimeter wave terahertz imaging device for security inspection of an object to be inspected, which includes a focusing lens, a micro polarizing plate array, a detector array and a graphic processing device.

The US patent US 7 583 074 B1 discloses low cost millimeter wave imagers using two-dimensional focal plane arrays based on backward tunneling diode (BTD) detectors.

The US patent application US 2019/115666 A1 discloses a horn antenna array provided with a plurality of horn antennas arranged in one direction.

The Chinese patent application CN 106 918 843 A discloses a passive terahertz imaging based video speed scanning system, which comprises a first wedge lens acquiring a scanned object, a second wedge lens and a feed source antenna.

## SUMMARY

The invention is set out in the appended set of claims.

## BRIEF DESCRIPTION OF ACCOMPANYING DRAWINGS

Fig. 1 is a schematic structural diagram of a passive security checking device according to an embodiment of the present disclosure.

Fig. 2 is a schematic operation diagram of a passive security checking device according to an embodiment of the present disclosure.

Fig. 3 is an operation flowchart of a passive security checking device according to an embodiment not encompassed by the wording of the claims of the present disclosure.

Fig. 4 is a schematic structural diagram of a receiving antenna unit according to an embodiment of the present disclosure.

Fig. 5 is a schematic structural diagram of a receiving antenna unit according to another embodiment of the present disclosure.

Fig. 6 is a schematic diagram illustrating a process of coupling the horn antenna with the lens.

Fig. 7 is a schematic diagram illustrating an efficiency of coupling the horn antenna with the lens.

Fig. 8 is a directional diagram of a W-waveband horizontally polarized bar-shaped horn antenna of 6x18x30 mm.

Fig. 9 is a diagram illustrating the distribution of spots on the focal plane of the horn antenna according to the present disclosure after passing through the lens.

Fig. 10 is a diagram illustrating the shape and sampling of a 3dB wave beam.

Fig. 11 is a schematic diagram illustrating the principle of a normal temperature direct detector.

Fig. 12 is a schematic diagram illustrating structural modules of a normal temperature direct detector.

Fig. 13 is a schematic diagram illustrating the principle of a normal temperature heterodyne mixing demodulation detector.

Fig. 14 is a schematic diagram illustrating structural modules of a normal temperature heterodyne mixing detector.

Fig. 15 is a diagram illustrating a detector array mounted in an arc.

Fig. 16 is a diagram illustrating a detector array mounted in an arc that is composed of polylines.

FIG. 17 is a schematic diagram illustrating a distribution of grid bars of a grid-type reflecting plate according to the present disclosure.

Figs. 18 (a) and (b) illustrate the relationship among reflectivity, an angle of incidence and frequency with vertical polarization and horizontal polarization in a case of a=lam/4, b=a/5, and lam=100GHz.

Fig. 19 is a schematic structural diagram of a grid-type reflecting plate according to an exemplary embodiment of the present disclosure.

Fig. 20 is a schematic structural diagram of a grid-type reflecting plate according to another exemplary embodiment of the present disclosure.

Fig. 21 is a schematic structural diagram of a grid-type reflecting plate according to another exemplary embodiment of the present disclosure.

Fig. 22 is a schematic structural diagram of a grid-type reflecting plate according to another exemplary embodiment of the present disclosure.

Fig. 23 is a schematic structural diagram of a passive security checking device according to another embodiment of the present disclosure.

## DETAILED DESCRIPTION OF EMBODIMENTS

Although the present disclosure will be fully described by referring to the drawings including preferred embodiments of the present disclosure, it should be understood that those skilled in the art can modify the invention described herein as well as obtaining the technical effect of the present disclosure.

In addition, in the following detailed description, for the convenience of explanation, many specific details are set forth to provide a comprehensive understanding of the embodiments of the present disclosure. However, obviously, one or more embodiments can also be implemented without these specific details. In other cases, well-known structures and devices are illustrated to simplify the drawings.

A receiving antenna unit for a passive security checking device is provided, wherein the receiving antenna unit includes a plurality of horn antennas, each horn antenna including a horn body and a waveguide connected to the horn body, and a ratio of a long side to a short side of a horn opening of the horn body is greater than 1.2.

According to the general inventive concept of the present disclosure, a passive security checking device is provided.

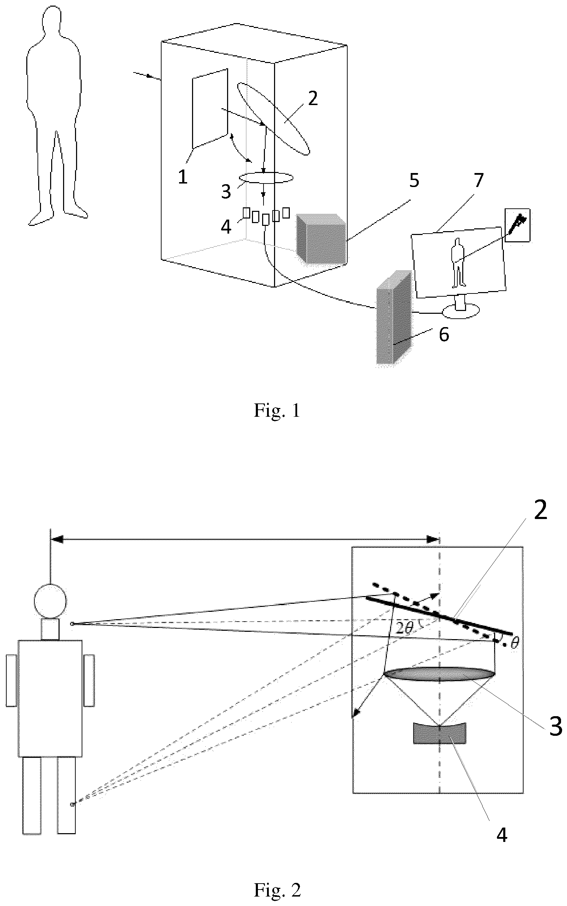

Fig. 1 is a schematic structural diagram of a passive security checking device according to an embodiment of the present disclosure.

As shown in Fig. 1, the passive security checking device according to the present disclosure includes a reflecting plate 2 and a servo system thereof, a lens 3, a detector array 4, a data collecting and processing means 6, a display 7 and a distribution box 5. Terahertz waves (or millimeter waves) spontaneously radiated by the object under check and terahertz waves (or millimeter waves) reflected by the background environment are incident on the reflecting plate 2 through a window 1 on a housing, and are reflected to the lens 3 by the reflecting plate 2, then received by the detector array 4 through the convergence of the lens 3. The detector array 4 converts the received Terahertz waves (or millimeter waves) into electrical signals. The data collecting and processing means 6 is connected to the detector array 4 to receive the electrical signals from the detector array 4 and generate a millimeter wave/terahertz wave image. The display 7 is connected to the data collecting and processing means 6, to receive and display the millimeter wave/terahertz wave image generated by the data collecting and processing means 6. The distribution box 5 is configured to supply power to the whole passive security checking device.

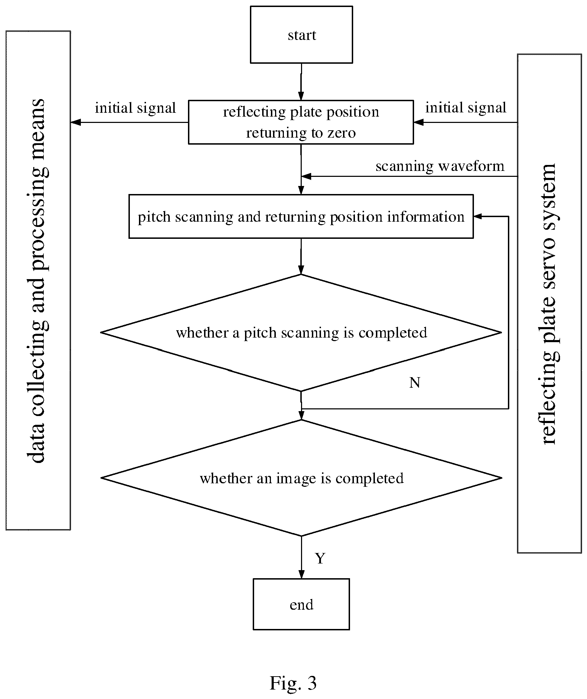

Fig. 2 is a diagram illustrating an operation principle of a passive security checking device according to an embodiment of the present disclosure. Fig. 3 is an operation flowchart of a passive security checking device according to an embodiment not encompassed by the wording of the claims.

As shown in Figs. 2 and 3, the servo system of the reflecting plate 2 controls the reflecting plate 2 to reciprocate, and the reciprocal of a period T of the movement is the imaging frame rate s. When the reflecting plate 2 swings from the maximum elevation angle to the minimum elevation angle, the swing angle is equal to $\theta$, to complete scanning at the angle of field that is equal to $2\theta$ in a height direction within a range of the depth of field. The reflecting plate 2 forms an image from the maximum elevation angle to the minimum elevation angle. The data collecting and processing means 6 has been collecting data in this process. The control system of the reflecting plate 2, for example, may be equipped with a position encoder to feed back scanning positions of the reflecting plate with high precision. When collecting data, the data collecting and processing means 6 first marks the collected data according to the information of the position encoder for distinguishing the data of the next image, then the data collecting and processing means 6 performs digital filtering and image reconstruction to the collected data to generate a millimeter wave image. Then, after performing image denoising and enhancement to the image, the data collecting and processing means 6 transfers the image data to the display 7, so that the image may be displayed, suspicious objects may be labeled and automatic alarm may be performed on the display 7.

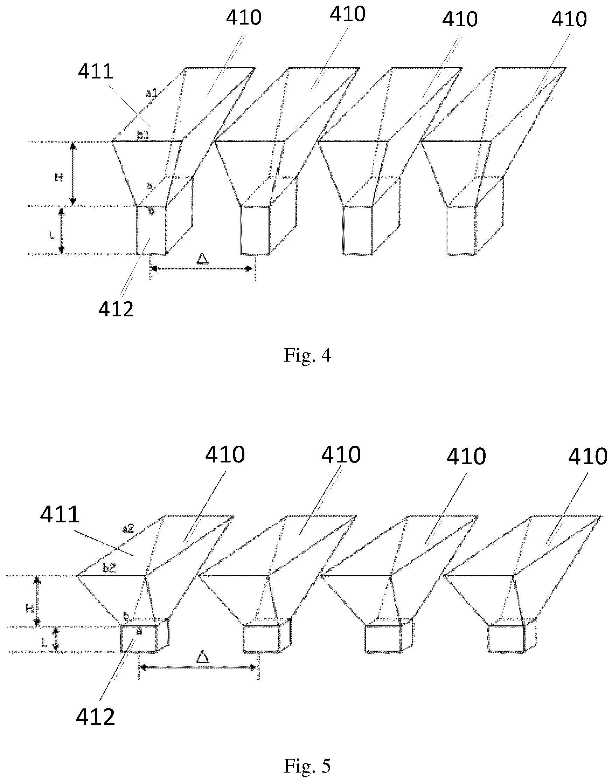

In an embodiment, as shown in Figs. 4 and 5, the receiving antenna unit for the passive security checking device includes a plurality of horn antennas 410, wherein the horn antenna 410 includes a horn body 411 and a waveguide 412 connected to the horn body 411. A ratio of the long side to the short side of a horn opening of the horn body 411 is greater than 1.2. The plurality of horn antennas 410 are one-dimensionally arranged or arranged in an arc in a direction of the short side of the horn opening of the horn body 411, that is, short sides of the plurality of horn openings may be arranged into two parallel straight lines or two parallel curves.

In an embodiment, as shown in Figs. 4 and 5, the waveguide 412 is a rectangular waveguide. It should be noted that those skilled in the art should understand that in some other embodiments of the present disclosure, the waveguide 412 may also have other shapes, such as circle.

As shown in Fig. 4, the long side a1 of the horn opening of the horn antenna 410 corresponds to the long side a of the rectangular waveguide. In such a case, the ratio of the long side a1 to the short side b1 of the horn opening of the horn antenna 410 is greater than 1.2, preferably $\geq$1.5. The size of the long side a1 depends on the resolution required by the system with ensuring the radiation performance of the horn antenna, and the short side b1 depends on the radiometer interval satisfying Rayleigh sampling, generally a1>a, b1>b; wherein a and b are the long side and the short side of the rectangular waveguide 412, respectively. However, the ratio of the long side a1 to the short side b1 of the horn antenna 410 should not be too large, otherwise, the resolution will be sacrificed. Typically, a1/b1$\leq$5. In addition, in order that the horn antenna has characteristics such as high radiation efficiency, high gain, positive-direction radiation and low sidelobe, etc., the height H of the horn body of the horn antenna 400 typically meets H $\geq$a1, preferably H is in the range of 1.2a1 to 1.5a1, or 1.5a1 to 2a1, or 2a1 to 3a1, for example, H is equal to 1.5a1, 2a1, and so on.

As shown in Fig. 5, the short side b2 of the horn opening of the horn antenna 410 corresponds to the long side a of the rectangular waveguide. In such a case, the ratio of the long side a2 to the short side b2 of the horn opening of the horn antenna 410 is greater than 1.2, preferably $\geq$1.5. The size of the long side a2 depends on the resolution required by the system with ensuring the radiation performance of the horn antenna 410, and the short side b2 depends on the radiometer interval satisfying Rayleigh sampling, generally a2>b, b2>a; wherein a and b are the long side and the short side of the rectangular waveguide 412, respectively. However, the ratio of the long side a2 to the short side b2 of the horn antenna 410 should not be too large, otherwise, the resolution will be sacrificed. Typically, a2/b2$\leq$5. In addition, in order that the horn antenna has characteristics such as high radiation efficiency, high gain, positive-direction radiation and low sidelobe, etc., the height H of the horn body of the horn antenna 400 typically meets H $\geq$a2, preferably H is in the range of 1.2a2 to 1.5a2, or 1.5a2 to 2a2, or 2a2 to 3a2, for example, H is equal to 1.5a2, 2a2, and so on.

When less than 300GHz, the brightness $B_f$ of the spontaneous radiation spectrum of the human body may be calculated according to the following formula:

$$B_f = \frac{2kTf^2}{c^2} = \frac{2kT}{\lambda^2}$$

wherein k is Boltzmann constant and its value is $1.38\times10\text{-}23\text{J}\cdot\text{K}^{-1}$;

T is the absolute temperature of the object, the unit is K;
c is the speed of light, and its value is $3\times10^8\text{m}\cdot\text{s-1}$;

Since thermal radiation noise signals of the human body and the suspicious object are non-polarized, and the receiving antenna is linearly polarized, the receiving antenna may only detect half of the total power of the thermal radiation signals incident on the antenna surface without considering other losses,

$$P = \frac{1}{2}A_r\int_f^{f+\Delta f}\iint_{4\pi}B_f(\theta,\varphi)f(\theta,\varphi)d\Omega df$$

wherein, $A_r$ is the equivalent area of the receiving antenna,

$f(\theta, \varphi)$ is the directional diagram of the receiving antenna.

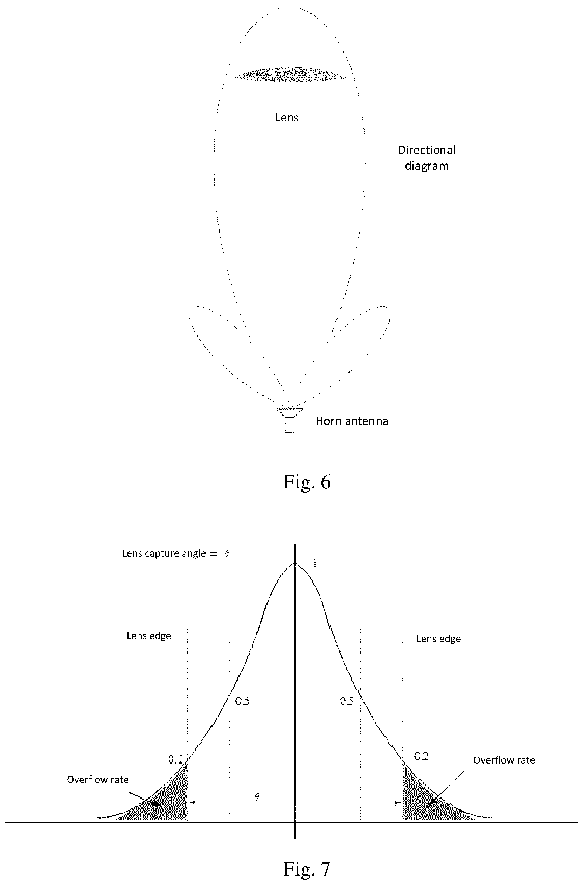

On one hand, since the absolute temperature of the human body is normally 310K, the brightness of the spontaneous radiation spectrum is constant. The gain of the receiving antenna may be represented as $G=A_r *\max(f(\theta, \varphi))$. Therefore, it is quite effective to increase the power P received by the detector by increasing the gain of the receiving antenna. For the horn antenna, its gain increases as its size does. As the size of the horn antenna increases, the sampling rate of the antenna array of the same length decreases. On the other hand, the coupling efficiency of the horn antenna with the lens decreases as the wave beam angle increases (Fig. 6 is a diagram illustrating the coupling process of the horn antenna with the lens. Fig. 7 is a diagram illustrating the coupling efficiency of the horn antenna with the lens). Therefore, the power coupling efficiency of the horn antenna with the optical system and the sampling interval are contradictory with each other. In order to solve the contradiction between the coupling efficiency of the optical system and the sampling interval to improve the signal-to-noise ratio of imaging, it is necessary to increase the gain of the horn antenna, that is, to arrange as many antennas as possible in a certain area while increasing its aperture, which relates to designs of antenna size and arrangement.

The receiving antenna unit provided by the present disclosure adopts a bar-shaped horn antenna 410, so that the beam width in the direction of its long side may be effectively compressed, its 3dB beam angle is small, and it has a higher coupling efficiency when applied in combination with a lens. In the direction of its short side, adequate antennas with the advantage of short size may be arranged, so that the sampling rate requirements may be satisfied. That is, the horn antenna reduces the overflow energy as much as possible in one dimension under the condition that it meets the sampling rate requirements in another dimension such that a better compromise effect can be obtained. Moreover, the hardware cost of the system can be greatly reduced by using one-row detector arrangement.

The detector array is arranged in the direction of the short side to achieve Rayleigh sampling, i.e., only one sampling is performed within one 3dB wave beam width, so that the coupling efficiency of the receiving antenna with the lens achieves nearly 50% in the direction of the short side and over 90% in the direction of the long side, thereby improving the overall coupling efficiency, the signal-to-noise ratio of the system and the imaging quality.

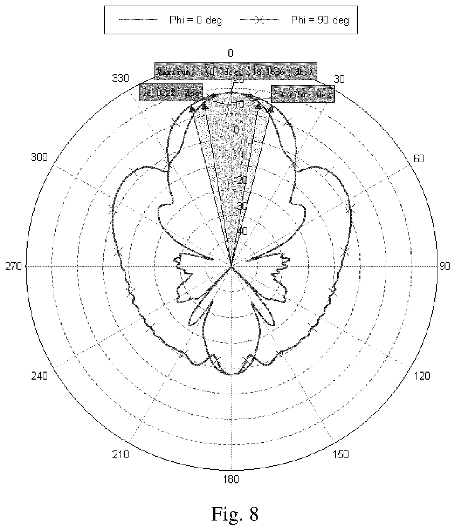

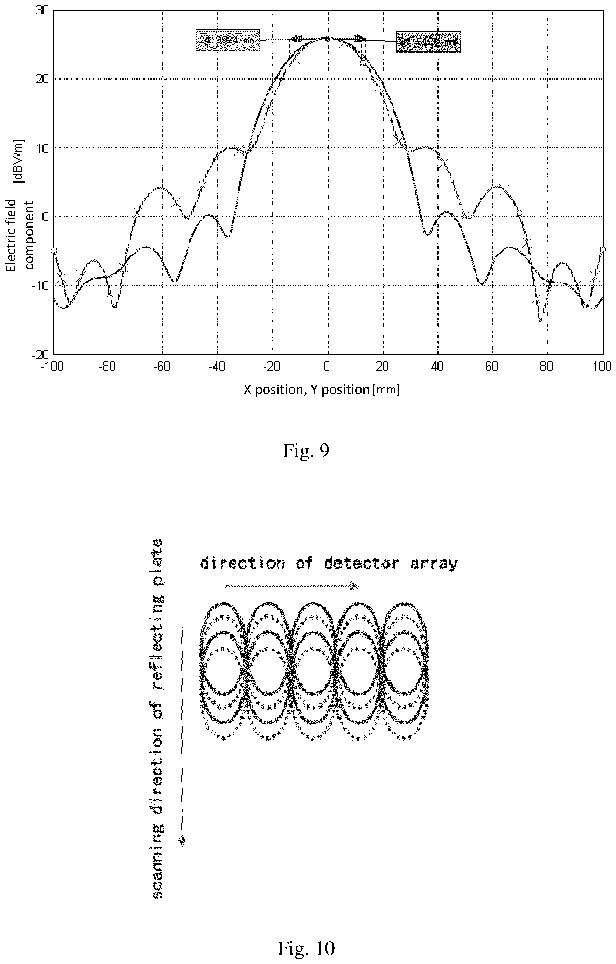

Fig. 8 is a directional diagram of a W-waveband horizontally polarized bar-shaped horn antenna of 6x18x30mm. Fig. 9 is a diagram illustrating the distribution of spots on the focal plane of the horn antenna according to the present disclosure after passing through the lens. It can be seen from Fig. 9 that the spots are distributed in an ellipse, and has a larger size in the direction of scanning.

Table 1 shows the coupling efficiencies of a normal horn antenna and the bar-shaped horn antenna of the present disclosure with the same lens at the same passage spacing.

Table 1

| Antenna size | 6X4.9X15mm | 6X18X30mm |
|---|---|---|
| Type of horn antenna | Normal horn antenna | Horn antenna of the present disclosure |
| 3dB wave beam width | Plane E 35.51° Plane H 34.3° | Plane E 28.02° Plane H 18.78° |
| gain | 14.57dBi | 18.16dBi |
| Positive-feed coupling efficiency | 50.2% | 72.08% |

It can be seen from Table 1 that for the bar-shaped horn antenna of the present disclosure, since its 3dB beam width is no longer symmetrical on planes E and H, the beam spot sizes in the horizontal and vertical directions of the object plane are different, which is no longer round, but oval. This oval beam spot is more advantageous than a circular beam spot for a scanning imaging system for human security checking. This is because the field of view in the height direction is realized by mechanical scanning. Thus, over-sampling can be realized by a high-speed ADC, thereby increasing the temperature sensitivity integration time of the detector. Further, in the direction of the detector array, only Rayleigh sampling can be achieved due to the limitation of the detector interval, causing the sampling of the imaged image to be asymmetric in the horizontal direction and in the height direction, which further causes different spatial resolutions. In this case, an elliptical beam spot is formed with the focusing of the polarization-enhanced bar-shaped horn antenna and being converged by the lens (as shown in Fig. 9), i.e., the beam spot is larger in the height direction and smaller in the horizontal direction. Then the entire field of view is sampled by scanning (as shown in Fig. 10). The spot in this form may be used for compensating for asymmetry of the spatial resolution caused by oversampling in the height direction and Rayleigh sampling in the array direction.

In addition, only when the polarization mode of the receiving antenna is consistent with the polarization mode of the received electromagnetic wave, the receiving antenna may effectively receive the signal. Otherwise the quality of the received signal will be deteriorated, or even no signal may be received at all. This phenomenon is called polarization mismatch. When the detector uses a rectangular waveguide, its polarization direction is determined by the direction of the waveguide port. The short side of the waveguide port parallel to the ground is defined as horizontal polarization, and the long side parallel to the ground plane is defined as vertical polarization.

The process of the thermal radiation detector from the human body or suspicious object can be divided into two steps: the first step is the process from the human body or suspicious object to the receiving antenna, and the second step is the transmission process of the detector content signal.

In the first step, the thermal radiation of the human body or the suspicious object in the terahertz band penetrates the clothing, reaches the reflecting plate and is reflected to the lens, then penetrates the front and back surfaces of the lens, and is finally received by the receiving antenna at the front end of the detector.

At an interface between free space and medium, reflection coefficients $R_{//}$ and $R_{\perp}$ of parallel polarized waves and vertically polarized waves may be represented as:

$$R_{\perp} = \frac{\cos\theta_i - \sqrt{n^2 - \sin^2\theta_i}}{\cos\theta_i + \sqrt{n^2 - \sin^2\theta_i}}$$

$$R_{/\!/} = \frac{\sqrt{n^2 - \sin^2\theta_i} - n^2\cos\theta_i}{n^2\cos\theta_i + \sqrt{n^2 - \sin^2\theta_i}}$$

In the formula, $\theta_i$ is the angle of incidence, $n$ is the received refractivity.

By solving the above formula, it can be found that $R_{\perp}$ is always greater than $R_{//}$, that is, the transmissivity of the parallel polarization component is greater. Reflection occurs at four locations: clothing, the reflecting plate, the front and rear surfaces of the lens, resulting in that at the receiving antenna, the power of the horizontal polarization component should be greater than that of the vertical polarization component. In this case, a horizontally polarized antenna is selected as the antenna at the front end of the detector.

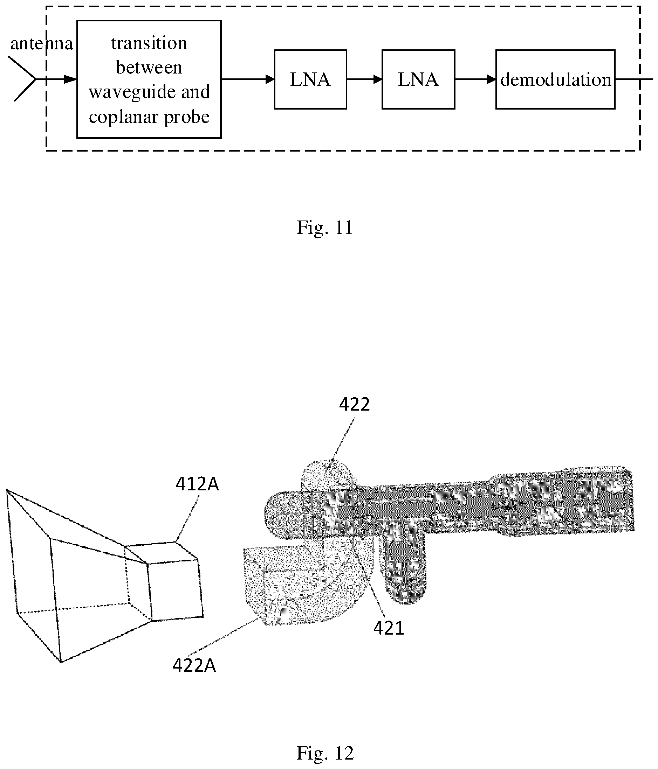

In the second step, A) For the normal temperature direct detector, as shown in Figs. 11 and 12, inside the detector, signals received by the receiving antenna are transferred through a transition waveguide to a transition structure between the waveguide and the coplanar probe, and then passes through multi-stage low noise amplifier (LNA), and finally demodulated by a demodulator. In order to maximize the received horizontal polarization component, polarization matching at two positions is involved here: at first position, the polarization direction of the rectangular waveguide of the horn antenna needs to be matched as horizontal polarization, and the polarization directions of the waveguide port surface 412A of the rectangular waveguide 412 of the horn antenna 410 and the waveguide port surface 422A of the transition waveguide section 422 need to match each other; at second position, the polarization direction from the transition waveguide section 422 to the coplanar line 421 also needs to match. If a polarization mismatch occurs at either or both of the two positions, the power transmission efficiency may be seriously affect, resulting in a low signal-to-noise ratio.

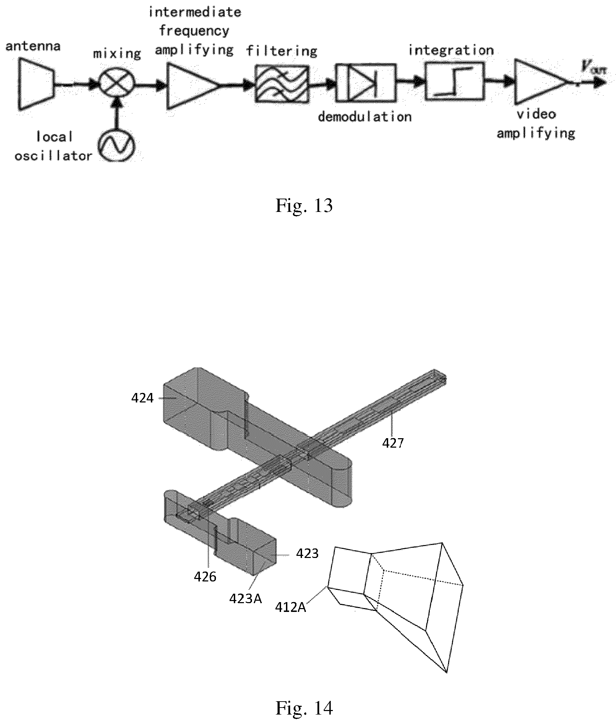

B) For the normal temperature heterodyne mixing-demodulation detector, as shown in Figs. 13 and 14, inside the detector, the signal received by the receiving antenna is transferred to the mixer 426 through RF input waveguide 423, and then passes through an intermediate frequency amplifier and filter 427, finally demodulated by the demodulator. In order to maximize the received horizontal polarization component, polarization matching at two positions is involved here: at first position, the polarization direction of the waveguide of the horn antenna 410 needs to be matched as horizontal polarization, and the polarization directions of the waveguide port surface 412A of the rectangular waveguide 412 of the horn antenna 410 and the waveguide port surface 423A of the RF input waveguide 423 need to match each other; at second position, the polarization direction of the local oscillator input waveguide 424 also needs to match. If a polarization mismatch occurs at either or both of the two positions, the power transmission efficiency may be seriously affect, resulting in a low signal-to-noise ratio.

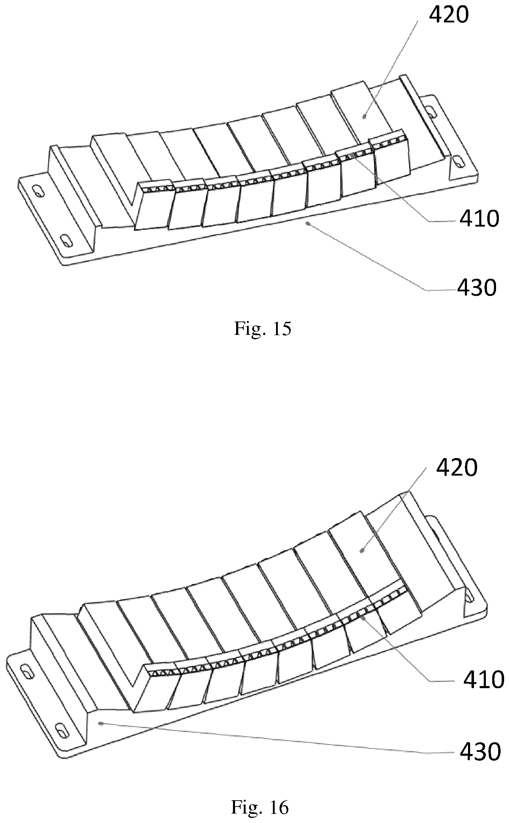

As shown in Fig. 15, the detector array 4 includes a detector support 430 and a plurality of detectors 420 that are mounted on the detector support 430 and arranged in an arc, and the radius of curvature of the arc is selected to be 0.8 to 1.2 times the image distance. The detector array 4 is placed on the focal plane of the lens 3. In some other embodiments of the present disclosure, as shown in Fig. 16, for the convenience of installation, the arrangement in an arc may be segmented into polylines.

According to another aspect of the present disclosure, a passive security checking device is further provided. The passive security checking device includes an optical means for reflecting and converging millimeter wave/terahertz waves spontaneously radiated by an object under check and millimeter wave/terahertz waves reflected by background environment; and a detector array 4 for receiving converged millimeter waves/terahertz waves and converting the received millimeter waves/terahertz waves into electrical signals, the detector array 4 including the above receiving antenna unit.

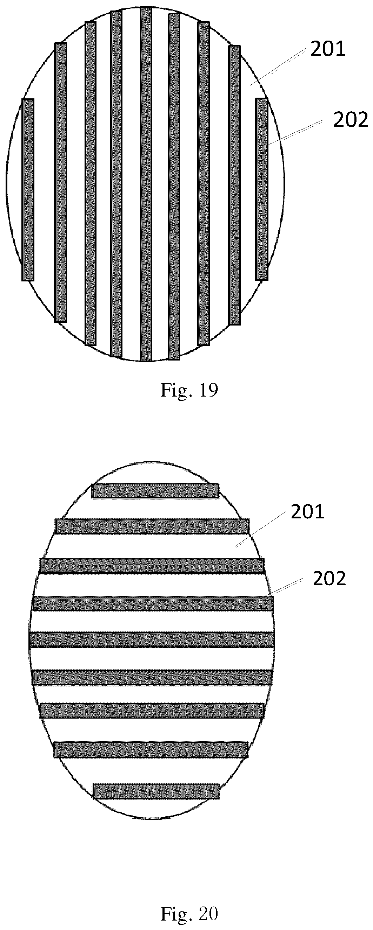

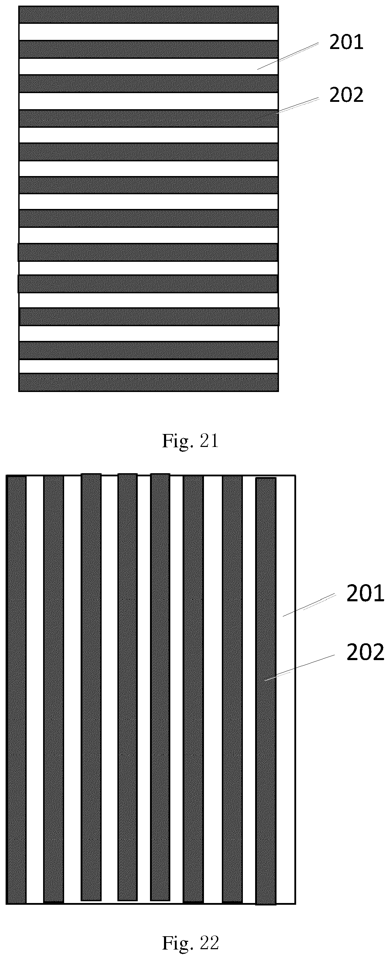

In the embodiment as shown in Figs. 19-22, the optical means of the passive security checking device includes a grid-type reflecting plate 2 for reflecting terahertz waves (or millimeter waves) spontaneously radiated by the object under check and terahertz waves (or millimeter waves) reflected by the background environment, wherein the distribution of the grids 202 on the grid-type reflecting plate 2 matches the polarization direction of the receiving antennas of the detectors in the detector array 4.

The receiving antenna of the detector of the passive security checking device based on normal temperature detector is typically linearly polarized. The spontaneous radiation of the human body and the suspicious object is non-polarized. The linearly polarized receiving antenna can only detect the spontaneous radiation component that matches its polarization direction, while the reflexive radiation component orthogonal to its polarization direction cannot be detected but reflected by the receiving antenna. The reflected wave becomes the noise of the system and reduces the temperature sensitivity of the system, affecting the final image quality and identification of suspicious objects. Therefore, the passive security checking device of the present disclosure adopts the grid-type reflecting plate 2, and the distribution of the grids 202 on the grid-type reflecting plate 2 matches the polarization direction of the receiving antennas of the detector array 4, so as to perform polarization selection to the reflecting plate 2, thereby improving the signal-to-noise ratio of the system, the temperature sensitivity of the system, and the image quality and identification of suspicious objects. In addition, the grid-type reflecting plate 2 may reduce the weight of the reflecting plate 2 and reduce the wind resistance of the swing of the reflecting plate 2, particularly in a case where the imaging speed is greater than 10 Hz.

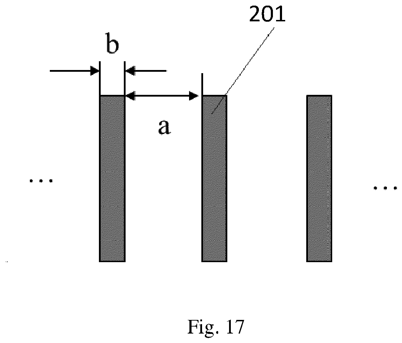

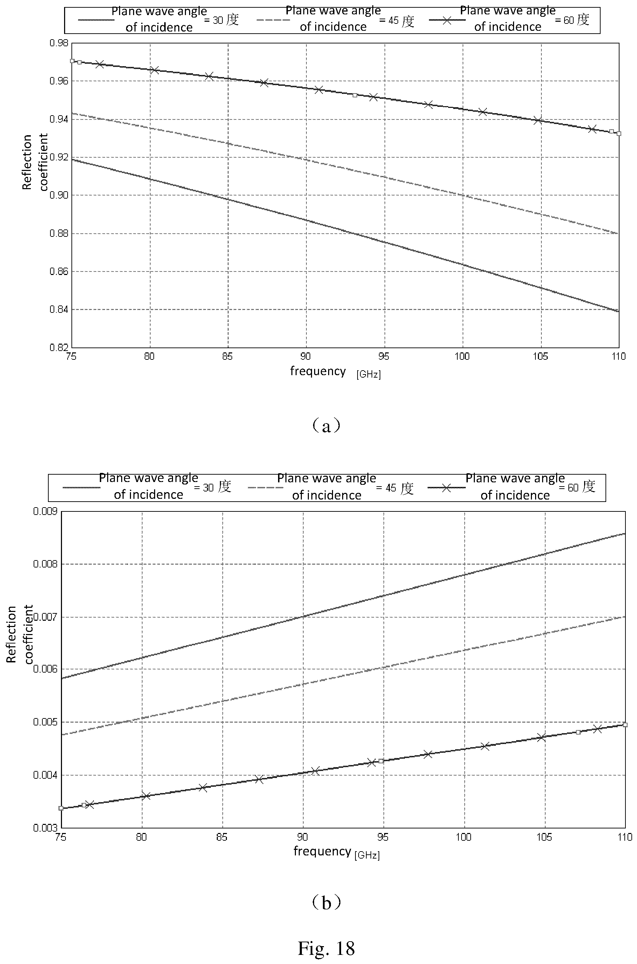

In an exemplary embodiment, as shown in Figs. 19-22, the grid-type reflecting plate 2 includes a substrate 201 and a plurality of metal grids 202 arranged on the substrate 201, wherein the plurality of metal grids 202 are periodically arranged in one dimension, for example, horizontally or vertically. Fig. 17 illustrates the arrangement of the grids 202, wherein a is the spacing between the metal grids 202 and b is the width of the metal grid 202. Specifically, the sizes of a and b depend on a balance among desired reflectivity, wind resistance, and weight. Figs. 18 (a) and (b) illustrate the relationship among reflectivity, an angle of incidence and frequency with vertical polarization and horizontal polarization in a case of a=lam/4, b=a/5, and lam=100GHz.

In an exemplary embodiment, if the polarization direction of the receiving antenna is the arrangement direction of the detector array, the arrangement direction of the metal grid 202 may also certainly be the arrangement direction of the detector array. In other words, the polarization direction of the antenna and the arrangement direction of the metal grid 202 both are the arrangement direction of the detector array.

In an exemplary embodiment, if the polarization direction of the receiving antenna is the orthogonal direction of the arrangement of the detector array, the arrangement direction of the metal grid 202 may also certainly be the orthogonal direction of the arrangement of the detector array. In other words, the polarization direction of the antenna and the arrangement direction of the metal grid 202 both are the orthogonal direction of the arrangement of the detector array.

Table 2 summarizes the reflectivity of vertical polarization and horizontal polarization with different a, b parameters.

Table 2

|  | Distance between grids a | Grid width b | R vertical polarization | R parallel polarization |
|---|---|---|---|---|
| Example1 | Lam/10 | a/5 | >0.97 | <0.023 |
| Example2 | Lam/4 | a/5 | >0.84 | <0.0085 |
| Example3 | Lam/5 | a/5 | >0.89 | <0.007 |
| Example4 | Lam/5 | a/3 | >0.95 | <0.002 |
| Example5 | Lam/5 | a/2 | >0.987 | <0.1 |
| Example6 | Lam/3 | a/2 | >0.962 | <0.19 |

It can be seen from Table 2 that for the polarization direction to be selected, if the reflectivity is required to reach 95%, the spacing between any two adjacent metal grids 202 should satisfy a≦lam/2, and the width of the metal grid 202 preferably satisfies b≦a/2. It should be noted that those skilled in the art should understand that other values may also be used in some other embodiments of the present disclosure.

As shown in Figs. 19-22, the shape of the grid-type reflecting plate 2 includes, but is not limited to, a circle, an ellipse, a square, a rectangle, and a polygon.

In addition, it should be noted that those skilled in the art should understand that in some other embodiments of the present disclosure, the lens 3 of the optical means may be a focusing reflecting plate, such as an ellipsoidal mirror, a Cassegrain reflector, etc. The focusing reflecting plate may also be a grid-type reflecting plate.

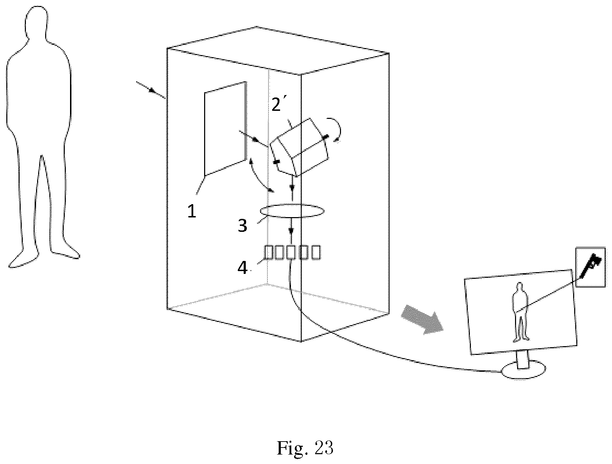

Fig. 23 is a schematic structural diagram of a passive security checking device according to another embodiment of the present disclosure. As shown in Fig. 23, the optical means may also adopt a polyhedral mirror 2' instead of the reflecting plate 2. The polyhedron mirror 2' includes a plurality of reflecting plates for reflecting terahertz waves (or millimeter waves) spontaneously radiated by the object under check and terahertz waves (or millimeter waves) reflected by the background environment, at least one of the plurality of reflecting plates being a grid-type reflecting plate.

According to another aspect of the present disclosure, a passive security checking device is further provided. The device includes an optical means for reflecting and converging millimeter wave/terahertz waves spontaneously radiated by an object under check and millimeter wave/terahertz waves reflected by background environment; and a detector array 4 for receiving converged millimeter waves/terahertz waves and converting the received millimeter waves/terahertz waves into electrical signals, the detector array 4 including the above receiving antenna unit.

As shown in Fig. 1, the passive security checking device may further include a data collecting and processing means 6. The data collecting and processing means 6 is wirelessly connected or wired electrically connected to the detector array 4 to receive the scanning data obtained by scanning the object to be checked from the detector array, and generate high-resolution terahertz wave (or millimeter wave) holographic image by an image reconstruction algorithm, and use automatic identification algorithm to automatically identify suspicious objects in terahertz wave (or millimeter wave) image. For example, the data collecting and processing means 6 may include a personal computer (PC), server, workstation, etc. According to some embodiments, the data collecting and processing means 6 may include a processor and a memory. The processor may be electrically connected to the detector array to receive and process the scanning data. The memory may be electrically connected to the processor and store instructions. The instructions are executed by the processor, to cause the processor to perform image reconstruction, or control the security checking device to scan and image the object to be checked.

The passive security checking device may further include a display 7. The display is connected to the data collecting and processing means 6, for receiving and displaying the terahertz wave (or millimeter wave) holographic image from the data collecting and processing means 6. It should be noted that in an exemplary embodiment, a control device 7 may be integrated with the data collecting and processing means 6.

In an example of the present disclosure, the passive security checking device is a human passive security instrument. However, it should be noted that those skilled in the art should understand that in some other embodiments not encompassed by the wording of the claims, the present disclosure may also be used for detection of other detected objects such as packages.

According to the above embodiments of the present disclosure, the passive security checking device and the receiving antenna unit thereof can improve the efficiency of the power coupling of the horn antenna with the lens on one hand; and on the other hand, can ensure the Rayleigh sampling interval of the detector. The passive security checking device and the receiving antenna unit thereof can solve the problem, faced by normal horn antennas, of contradiction between sampling interval and coupling efficiency. By controlling the polarization direction of the receiving antenna of the detector and increasing the gain of the receiving antenna, the signal-to-noise ratio of the system is increased. In addition, since the entire security checking system has various noises, such as the detector itself, environmental noise, background noise, and noise caused by clothing, the noise orthogonal to the polarization direction of the receiving antenna can be well suppressed, thereby improving the signal-to-noise ratio of the system.

**Claims**

1. A passive security checking device, wherein the passive security checking device comprises:

an optical means configured for reflecting and converging millimeter wave/terahertz waves spontaneously radiated by an object under check and millimeter wave/terahertz waves reflected by background environment; and
a detector array (4) configured for receiving converged millimeter waves/terahertz waves and converting the received millimeter waves/terahertz waves into electrical signals;
wherein the detector array (4) comprises a receiving antenna unit, wherein the receiving antenna unit comprises a plurality of horn antennas (410) each comprising a horn body (411) and a waveguide (412) connected to the horn body and a ratio of a long side to a short side of an horn opening of the horn body is greater than 1.2;
wherein a polarization direction of each of the plurality of the horn antennas (410) is horizontal;
wherein the detector array (4) comprises a plurality of detectors, each detector is connected to one of the plurality of the horn antennas, and for each detector and its respective horn antenna, the detector comprises a normal temperature direct detector comprising a coplanar line (421) and a transition waveguide (422) for inputting millimeter waves/terahertz waves, the polarization direction of the waveguide (412) of the horn antenna (410) being configured to be horizontal polarization, the polarization direction of a waveguide port surface (412A) of the waveguide (412) of the horn antenna (410) matching the polarization direction of a waveguide port surface (422A) of the transition waveguide (422); and/or

a polarization direction from the transition waveguide (422) to the coplanar line (421) matches the polarization direction of the waveguide (412) of the horn antenna (410);

wherein the optical means comprises a grid-type reflecting plate (2), and a distribution of grids (202) on the grid-type reflecting plate (2) matches the polarization direction of each of the plurality of the horn antennas in the detector array (4).

2. A passive security checking device, wherein the passive security checking device comprises:

an optical means configured for reflecting and converging millimeter wave/terahertz waves spontaneously radiated by an object under check and millimeter wave/terahertz waves reflected by background environment; and

a detector array (4) configured for receiving converged millimeter waves/terahertz waves and converting the received millimeter waves/terahertz waves into electrical signals;

wherein the detector array (4) comprises a receiving antenna unit, wherein the receiving antenna unit comprises a plurality of horn antennas (410) each comprising a horn body (411) and a waveguide (412) connected to the horn body and a ratio of a long side to a short side of an horn opening of the horn body is greater than 1.2, wherein a polarization direction of each of the plurality of the horn antennas (410) is horizontal;

wherein the detector array (4) comprises a plurality of detectors, each detector is connected to one of the plurality of the horn antennas and for each detector and its respective horn antenna, the detector comprises a normal temperature heterodyne mixing demodulation detector comprising a local oscillator input waveguide (424) and a radio frequency input waveguide (423), a polarization direction of the waveguide (412) of the horn antenna (410) being configured to be horizontal polarization, a polarization direction of a waveguide port surface (412A) of the waveguide (412) of the horn antenna (410) matching a polarization direction of a waveguide port surface (423A) of the radio frequency input waveguide (423); and/or

a polarization direction of the local oscillator input waveguide (424) matches the polarization direction of the waveguide (412) of the horn antenna (410);

wherein the optical means comprises a grid-type reflecting plate (2), and a distribution of grids (202) on the grid-type reflecting plate (2) matches the polarization direction of each of the plurality of the horn antennas in the detector array (4).

3. The passive security checking device according to claim 1, further comprising:

a data collecting and processing means (6) that is connected to the detector array (4) to receive electrical signals from the detector array (4) and generate a millimeter wave/terahertz wave image; and

a display (7) that is connected to the data collecting and processing means (6) and configured for receiving and displaying the generated millimeter wave/terahertz wave image from the data collecting and processing means (6).

4. The passive security checking device according to claim 1 or 3, wherein the passive security checking device is a human passive security instrument.

5. The passive security checking device according to claim 2, further comprising:

a data collecting and processing means (6) that is connected to the detector array (4) to receive electrical signals from the detector array (4) and generate a millimeter wave/terahertz wave image; and

a display (7) that is connected to the data collecting and processing means (6) and configured for receiving and displaying the generated millimeter wave/terahertz wave image from the data collecting and processing means (6).

6. The passive security checking device according to claim 2 or 5, wherein the passive security checking device is a human passive security instrument.

**Patentansprüche**

1. Passive Sicherheitsüberprüfungsvorrichtung, wobei die passive Sicherheitsüberprüfungsvorrichtung Folgendes umfasst:

eine optische Einrichtung, die konfiguriert ist, um Millimeterwellen/Terahertzwellen, die spontan von einem zu prüfenden Objekt abgestrahlt werden, und Millimeterwellen/Terahertzwellen, die von der Hintergrundumgebung reflektiert werden, zu reflektieren und konvergieren; und

eine Detektoranordnung (4), die konfiguriert ist, um konvergierte Millimeterwellen/Terahertzwellen zu empfangen und die empfangenen Millimeterwellen/Terahertzwellen in elektrische Signale umzuwandeln;

wobei die Detektoranordnung (4) eine Empfangsantenneneinheit umfasst,

wobei die Empfangsantenneneinheit eine Vielzahl von Hornantennen (410) umfasst, jeweils umfassend einen Hornkörper (411) und einen mit dem Hornkörper verbundenen Wellenleiter (412), und wobei ein Verhältnis einer langen Seite zu einer kurzen Seite einer Hornöffnung des Hornkörpers größer ist als 1,2;

wobei eine Polarisationsrichtung jeder der Vielzahl der Hornantennen (410) horizontal ist;

wobei die Detektoranordnung (4) eine Vielzahl von Detektoren umfasst, jeder Detektor mit einer der Vielzahl der Hornantennen verbunden ist und der Detektor für jeden Detektor und seine jeweilige Hornantenne einen direkten Normaltemperaturdetektor umfasst, umfassend eine koplanare Leitung (421) und einen Übergangswellenleiter (422) zum Einleiten von Millimeterwellen/Terahertzwellen, wobei die Polarisationsrichtung des Wellenleiters (412) der Hornantenne (410) konfiguriert ist, um horizontal polarisiert zu sein, wobei die Polarisationsrichtung einer Wellenleiteranschlussfläche (412A) des Wellenleiters (412) der Hornantenne (410) mit der Polarisationsrichtung einer Wellenleiteranschlussfläche (422A) des Übergangswellenleiters (422) übereinstimmt; und/oder

eine Polarisationsrichtung von dem Übergangswellenleiter (422) zu der koplanaren Leitung (421) mit der Polarisationsrichtung des Wellenleiters (412) der Hornantenne (410) übereinstimmt;

wobei die optische Einrichtung eine gitterartige reflektierende Platte (2) umfasst und eine Verteilung von Gittern (202) auf der gitterartigen reflektierenden Platte (2) mit der Polarisationsrichtung jeder der Vielzahl der Hornantennen in der Detektoranordnung (4) übereinstimmt.

2. Passive Sicherheitsüberprüfungsvorrichtung, wobei die passive Sicherheitsüberprüfungsvorrichtung Folgendes umfasst:

eine optische Einrichtung, die konfiguriert ist, um Millimeterwellen/Terahertzwellen, die spontan von einem zu prüfenden Objekt abgestrahlt werden, und Millimeterwellen/Terahertzwellen, die von der Hintergrundumgebung reflektiert werden, zu reflektieren und konvergieren; und

eine Detektoranordnung (4), die konfiguriert ist, um konvergierte Millimeterwellen/Terahertzwellen zu empfangen und die empfangenen Millimeterwellen/Terahertzwellen in elektrische Signale umzuwandeln;

wobei die Detektoranordnung (4) eine Empfangsantenneneinheit umfasst,

wobei die Empfangsantenneneinheit eine Vielzahl von Hornantennen (410) umfasst, jeweils umfassend einen Hornkörper (411) und einen mit dem Hornkörper verbundenen Wellenleiter (412), und wobei ein Verhältnis einer langen Seite zu einer kurzen Seite einer Hornöffnung des Hornkörpers größer ist als 1,2;

wobei eine Polarisationsrichtung jeder der Vielzahl der Hornantennen (410) horizontal ist;

wobei die Detektoranordnung (4) eine Vielzahl von Detektoren umfasst, jeder Detektor mit einer der Vielzahl der Hornantennen verbunden ist und der Detektor für jeden Detektor und seine jeweilige Hornantenne eine Normaltemperatur-Heterodyn-Mischdemodulation umfasst, umfassend einen lokalen Oszillator-Eingangswellenleiter (424) und einen Hochfrequenz-Eingangswellenleiter (423), wobei eine Polarisationsrichtung des Wellenleiters (412) der Hornantenne (410) konfiguriert ist, um horizontal polarisiert zu sein, wobei eine Polarisationsrichtung einer Wellenleiteranschlussfläche (412A) des Wellenleiters (412) der Hornantenne (410) mit einer Polarisationsrichtung einer Wellenleiteranschlussfläche (423A) des Hochfrequenz-Eingangswellenleiters (423) übereinstimmt; und/oder

eine Polarisationsrichtung des lokalen Oszillator-Eingangswellenleiters (424) mit der Polarisationsrichtung des Wellenleiters (412) der Hornantenne (410) übereinstimmt;

wobei die optische Einrichtung eine gitterartige reflektierende Platte (2) umfasst und eine Verteilung von Gittern (202) auf der gitterartigen reflektierenden Platte (2) mit der Polarisationsrichtung jeder der Vielzahl der Hornantennen in der Detektoranordnung (4) übereinstimmt.

3. Passive Sicherheitskontrollvorrichtung nach Anspruch 1, ferner umfassend:

eine Datenerfassungs- und -verarbeitungseinrichtung (6), die mit der Detektoranordnung (4) verbunden ist, um elektrische Signale von der Detektoranordnung (4) zu empfangen und ein Millimeterwellen-/Terahertzwellenbild zu erzeugen; und

eine Anzeige (7), die mit der Datenerfassungs- und - verarbeitungseinrichtung (6) verbunden ist und konfiguriert ist, um das erzeugte Millimeterwellen-/Terahertzwellenbild von der Datenerfassungs- und -verarbeitungseinrichtung (6) zu empfangen und anzuzeigen.

4.   Passive Sicherheitskontrollvorrichtung nach Anspruch 1 oder 3, wobei die passive Sicherheitskontrollvorrichtung ein passives Sicherheitsinstrument für Menschen ist.

5.   Passive Sicherheitskontrollvorrichtung nach Anspruch 2, ferner umfassend:

eine Datenerfassungs- und -verarbeitungseinrichtung (6), die mit der Detektoranordnung (4) verbunden ist, um elektrische Signale von der Detektoranordnung (4) zu empfangen und ein Millimeterwellen-/Terahertzwellenbild zu erzeugen; und
eine Anzeige (7), die mit der Datenerfassungs- und - verarbeitungseinrichtung (6) verbunden ist und konfiguriert ist, um das erzeugte Millimeterwellen-/Terahertzwellenbild von der Datenerfassungs- und -verarbeitungseinrichtung (6) zu empfangen und anzuzeigen.

6.   Passive Sicherheitskontrollvorrichtung nach Anspruch 2 oder 5, wobei die passive Sicherheitskontrollvorrichtung ein passives Sicherheitsinstrument für Menschen ist.

**Revendications**

1.   Dispositif de vérification de sécurité passive, dans lequel le dispositif de vérification de sécurité passive comprend :

un moyen optique configuré de manière à réfléchir et faire converger des ondes millimétriques / ondes térahertz spontanément rayonnées par un objet en cours de vérification et des ondes millimétriques / ondes térahertz réfléchies par l'environnement de fond ; et
un réseau de détecteurs (4) configuré de manière à recevoir les ondes millimétriques / ondes térahertz convergées, et à convertir les ondes millimétriques / ondes térahertz reçues en signaux électriques ;
dans lequel le réseau de détecteurs (4) comprend une unité d'antenne de réception, dans laquelle l'unité d'antenne de réception comprend une pluralité d'antennes à cornet (410) comprenant chacune un corps de cornet (411) et un guide d'ondes (412) connecté au corps de cornet, et dans lequel un rapport entre le côté long et le côté court d'une ouverture de cornet du corps de cornet est supérieur à 1,2 ;
dans lequel une direction de polarisation de chaque antenne de la pluralité d'antennes à cornet (410) est horizontale ;
dans lequel le réseau de détecteurs (4) comprend une pluralité de détecteurs, chaque détecteur est connecté à l'une de la pluralité d'antennes à cornet, et pour chaque détecteur et son antenne à cornet respective, le détecteur comprend un détecteur direct à température normale comprenant une ligne coplanaire (421) et un guide d'ondes de transition (422) permettant d'appliquer en entrée les ondes millimétriques / ondes térahertz,
la direction de polarisation du guide d'ondes (412) de l'antenne à cornet (410) étant configurée de manière à être une polarisation horizontale, la direction de polarisation d'une surface de port de guide d'ondes (412A) du guide d'ondes (412) de l'antenne à cornet (410) correspondant à la direction de polarisation d'une surface de port de guide d'ondes (422A) du guide d'ondes de transition (422) ; et/ou
une direction de polarisation entre le guide d'ondes de transition (422) et la ligne coplanaire (421) correspond à la direction de polarisation du guide d'ondes (412) de l'antenne à cornet (410) ;
dans lequel le moyen optique comprend une plaque réfléchissante de type grille (2), et une distribution des grilles (202) sur la plaque réfléchissante de type grille (2) correspond à la direction de polarisation de chacune de la pluralité d'antennes à cornet dans le réseau de détecteurs (4).

2.   Dispositif de vérification de sécurité passive, dans lequel le dispositif de vérification de sécurité passive comprend :

un moyen optique configuré de manière à réfléchir et faire converger des ondes millimétriques / ondes térahertz spontanément rayonnées par un objet en cours de vérification et des ondes millimétriques / ondes térahertz réfléchies par l'environnement de fond ; et
un réseau de détecteurs (4) configuré de manière à recevoir les ondes millimétriques / ondes térahertz convergées, et à convertir les ondes millimétriques / ondes térahertz reçues en signaux électriques ;
dans lequel le réseau de détecteurs (4) comprend une unité d'antenne de réception, dans laquelle l'unité d'antenne de réception comprend une pluralité d'antennes à cornet (410) comprenant chacune un corps de cornet (411) et un guide d'ondes (412) connecté au corps de cornet, et dans lequel un rapport entre le côté long et le côté court d'une ouverture de cornet du corps de cornet est supérieur à 1,2 ;

dans lequel une direction de polarisation de chaque antenne de la pluralité d'antennes à cornet (410) est horizontale ;

dans lequel le réseau de détecteurs (4) comprend une pluralité de détecteurs, chaque détecteur est connecté à l'une de la pluralité d'antennes à cornet, et pour chaque détecteur et son antenne à cornet respective, le détecteur comprend un détecteur de démodulation de mélange hétérodyne à température normale comprenant un guide d'ondes d'entrée d'oscillateur local (424) et un guide d'ondes d'entrée de radiofréquence (423), une direction de polarisation du guide d'ondes (412) de l'antenne à cornet (410) étant configurée de manière à être une polarisation horizontale, une direction de polarisation d'une surface de port de guide d'ondes (412A) du guide d'ondes (412) de l'antenne à cornet (410) correspondant à une direction de polarisation d'une surface de port de guide d'ondes (423A) du guide d'ondes d'entrée de radiofréquence (423) ; et/ou

une direction de polarisation du guide d'ondes d'entrée d'oscillateur local (424) correspond à la direction de polarisation du guide d'ondes (412) de l'antenne à cornet (410) ;

dans lequel le moyen optique comprend une plaque réfléchissante de type grille (2), et une distribution des grilles (202) sur la plaque réfléchissante de type grille (2) correspond à la direction de polarisation de chacune de la pluralité d'antennes à cornet dans le réseau de détecteurs (4).

3. Dispositif de vérification de sécurité passive selon la revendication 1, comprenant en outre :

un moyen de collecte et de traitement de données (6) qui est connecté au réseau de détecteurs (4) pour recevoir des signaux électriques provenant du réseau de détecteurs (4) et générer une image d'ondes millimétriques / ondes térahertz ; et

un écran d'affichage (7) qui est connecté au moyen de collecte et de traitement de données (6) et configuré de manière à recevoir et afficher l'image d'ondes millimétriques / ondes térahertz générée par le moyen de collecte et de traitement de données (6).

4. Dispositif de vérification de sécurité passive selon la revendication 1 ou 3, dans lequel le dispositif de vérification de sécurité passive est un instrument de sécurité passive humaine.

5. Dispositif de vérification de sécurité passive selon la revendication 2, comprenant en outre :

un moyen de collecte et de traitement de données (6) qui est connecté au réseau de détecteurs (4) pour recevoir des signaux électriques provenant du réseau de détecteurs (4) et générer une image d'ondes millimétriques / ondes térahertz ; et

un écran d'affichage (7) qui est connecté au moyen de collecte et de traitement de données (6) et configuré de manière à recevoir et afficher l'image d'ondes millimétriques / ondes térahertz générée par le moyen de collecte et de traitement de données (6).

6. Dispositif de vérification de sécurité passive selon la revendication 2 ou 5, dans lequel le dispositif de vérification de sécurité passive est un instrument de sécurité passive humaine.

Fig. 1

Fig. 2

start

data collecting and processing means

reflecting plate servo system

initial signal → reflecting plate position returning to zero ← initial signal

scanning waveform

pitch scanning and returning position information

whether a pitch scanning is completed    N

whether an image is completed

Y

end

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

（a）

（b）

Fig. 18

201

202

Fig. 19

201

202

Fig. 20

Fig. 21

Fig. 22

Fig. 23

**EP 3 845 930 B1**

**REFERENCES CITED IN THE DESCRIPTION**

**Patent documents cited in the description**

- CN 109361074 A
- CN 109471194 A
- US 7583074 B1
- US 2019115666 A1
- CN 106918843 A